# EUROPEAN PATENT SPECIFICATION

(11) **EP 4 205 293 B1**
(45) Date of publication and mention of the grant of the patent: **04.03.2026**
(21) Application number: 20771840.4
(22) Date of filing: 14.09.2020
(51) Int. Cl.: H04B 7/06, H01Q 21/06, H01Q 13/02

(54) **ANTENNA DEVICE AND BASE STATION WITH ANTENNA DEVICE**
ANTENNENVORRICHTUNG UND BASISSTATION MIT ANTENNENVORRICHTUNG
DISPOSITIF D'ANTENNE ET STATION DE BASE AVEC DISPOSITIF D'ANTENNE

(43) Date of publication of application: 05.07.2023
(73) Proprietor: Huawei Technologies Co., Ltd., Shenzhen, Guangdong 518129 (CN)
(72) Inventor: KHATTAK, Muhammad, Kamran, 80992 Munich (DE); WOLOSINSKI, Grzegorz, 80992 Munich (DE); BISCONTINI, Bruno, 80992 Munich (DE); MURILLO BARRERA, Alejandro, 80992 Munich (DE)
(74) Representative: Maiwald GmbH
(86) International application number: PCT/EP2020/075600
(87) International publication number: WO 2022/053154

(56) References cited:
- US-A1- 2012 133 557
- US-A1- 2014 210 666
- US-A1- 2019 044 223

## Description

### TECHNICAL FIELD

The present disclosure relates generally to the field of antenna devices; and more specifically, to antenna devices for transmitting or receiving radio frequency signals and base stations having the antenna devices.

### BACKGROUND

New wireless communication technologies, such as fifth generation (5G) communication technology, make use of several frequency ranges, including sub-6 Gigahertz and millimeter-wave bands to transmit and receive radio frequency signals. Typically, upper frequency bands (e.g. millimeter-wave bands) suffer from poor propagation characteristics, whereas lower frequency bands (e.g. sub-6 Gigahertz) are more attractive in terms of propagation and coverage, but require large antennas. Thus, the need to keep these antennas (which operate in lower frequency bands) within constrained dimensions make their design difficult.

Generally, 5G cellular communication technology involve extensive use of massive MIMO (multiple-input multiple-output) systems to simultaneously provide radio frequency signals to multiple user devices. Such communication technologies based on MIMO (e.g. massive MIMO) make use of conventional antenna devices with multiple clusters (each cluster includes one or more radiating elements). Each of these clusters is fed usually by one radio chain. Often, the allowed size of the radiating element (i.e. aperture) is constrained. To allow greater control of radiation patterns of the massive MIMO system, a large number of radio chains is used which are mapped to the available radiating elements. The aforesaid mapping is designed in a way that suits the network environment, such as coverage requirements and user distribution. Traditionally, the mapping is uniform, and it is done by distributing radiating elements in columns, rows, or in fractions (for example halves, quarters). However, when the mapped clusters (which are geometrically equal) are arranged very densely, the coupling between the radiating elements may become unacceptably high and the radiation patterns become highly correlated. As a result, the conventional antenna device exhibits a degradation in its capability to transmit independent information streams, which is not desirable.

Moreover, the conventional antenna devices currently used in cellular communication are rectangular and mostly make use of vertical apertures (i.e. larger vertical dimension as compared to horizontal dimension when deployed). However, such a structure of the conventional antenna device reduces system performance, especially for 5G communication, as beamformed patterns produced by such conventional antenna devices lack sufficient resolution. Moreover, the conventional antenna devices by virtue of its cluster arrangement exhibit high reflected power (return losses) and low isolation.

Therefore, in light of the foregoing discussion, there exists a need to overcome the aforementioned drawbacks associated with conventional antenna devices.

US 2014/210666 A1 describes an apparatus of wireless communication via an antenna array.

US 2012/133557 A1 describes a system for high performance beam forming with small antenna form factor.

US 2019/044223 A1 describes a waveguide aperture design for geo satellites.

### SUMMARY

The present disclosure seeks to provide an antenna device for transmitting or receiving a radio frequency (RF) signal and a base station comprising one or more such antenna devices. The present disclosure seeks to provide a solution to the existing problem of highly correlated radiation patterns and unacceptably high coupling between radiating elements (i.e. low isolation) in a conventional antenna device resulting in inefficient performance of the conventional antenna device (e.g. capability to transmit independent information streams is degraded). An aim of the present disclosure is to provide a solution that overcomes at least partially the problems encountered in prior art, and provides an improved antenna device and an improved base station with one or more such antenna devices that provides improved system performance of the antenna device and compliant isolation and return loss, for example, by reducing coupling between different radiating elements of the antenna device (e.g. for enhanced 5G communication in lower frequency bands within constrained dimensions, i.e., without increasing the size of the antenna device).

The object of the present disclosure is achieved by the solutions provided in the enclosed independent claims. Advantageous implementations of the present disclosure are further defined in the dependent claims.

In one aspect, the present disclosure provides an antenna device for transmitting or receiving a radio frequency, RF, signal, the antenna device comprising: a plurality of RF signal feeds; and an array of M times N radiating elements, the array comprising M rows and N columns, wherein M≥2 and N≥M. The array is subdivided into a plurality of clusters, each cluster comprising one or more radiating elements, the one or more radiating elements of each cluster connected to one of the RF signal feeds; wherein the columns include two outer columns and one or more inner columns, each inner column comprising K1 clusters, K1≥1, each outer column comprising K2 clusters, wherein K2>K1.

The antenna device of the present disclosure provides an improved system performance as well as ensures compliance in terms of return loss and isolation levels. The antenna device of the present disclosure includes the array of radiating elements which has the number of columns greater than the number of rows in comparison to the conventional antenna device. This provides a horizontal form factor to the antenna device (i.e. considering an aperture plane, its width is greater than its height when deployed). The distribution of the plurality of clusters in the array is such that it enables high azimuthal resolution with capability to transmit independent information streams, and maintains adequate separation between the radiating elements to accomplish the required return loss and isolation levels within constrained (i.e. allowed) dimensions. Moreover, the antenna device of the present disclosure has higher number of clusters in the outer columns (e.g. by split of outer columns) in comparison to number of clusters in inner columns (i.e. K2>K1). This distribution of clusters (e.g. more clusters at outer or edge columns than at inner columns) ensures adequate system performance and ensures illumination efficiency of its aperture even if the number of radiating elements and number of clusters is less than the conventional antenna device.

In an implementation form, the rows and the columns in the antenna device are horizontal and vertical, respectively, wherein the vertical is a direction toward the earth's centre from a position of the antenna device when in operation, and the horizontal is a direction that is orthogonal to the vertical direction.

In order to increase the inter-element isolation, the number of radiating elements is reduced, both in the horizontal and the vertical orientations as compared to conventional antenna devices. Moreover, the massive MIMO performance of the antenna device is improved by utilizing an architecture that has the horizontal form factor (i.e. wider than taller) when deployed.

In a further implementation form, N equals six, seven or eight.

In order to increase the inter-element isolation, the number of radiating elements and the number of physical columns are reduced in the antenna device (e.g. N equals to six), as compared to a conventional antenna device. In an example, the number of columns in the array, i.e. the number N, may be defined by a maximum permitted size of the antenna device and the spacing between adjacent radiating elements, for example, spacing of approximately half of a wavelength of the RF signal.

In a further implementation form, M equals two, three, or four.

In other words, the array comprises two or three or four rows of radiating elements. In comparison to conventional antenna devices, the number of rows in the antenna device is less than or equal to the number of columns. In an example, one of the best practical trade-off between system performance and achievement of the necessary levels of isolation is observed, for example, in the antenna architecture of 2 rows x 6 columns. It is to be understood to one of ordinary skill in the art that the number of M rows and N columns may vary, as long as a horizontal form factor of the antenna device is achieved (e.g. when N>M, such as N=30, M=8, and the like).

In a further implementation form, the RF signal feeds are each connectable to a respective power transceiver.

In the antenna device, the one or more radiating elements of each cluster are connected to one of the RF signal feeds, and each of the power transceivers (i.e. a part of radio chain) is connected to one or more radiating elements of one cluster via corresponding RF signal feed to achieve improved system performance and cost-effective construction of the antenna device for MIMO.

In a further implementation form, one or more of the columns each comprise two clusters of radiating elements, the two clusters being arranged adjacent to one another.

The two clusters being arranged adjacent to each other means that the two clusters do not overlap and are not interleaved with each other, thereby reducing any coupling between the radiating elements of adjacent clusters.

In a further implementation form, the number of power transceivers is sixteen and the number of clusters is eight.

By virtue of eight clusters and sixteen power transceivers, a cost-effective antenna device is provided within allowed size constraints.

In a further implementation form, each of the radiating elements is dual polarised.

The dual polarised radiating elements are compact in size and both polarizations (i.e. two orthogonal polarizations) potentially have similar radiation patterns, which provide coverage to similar geographical areas.

In a further implementation form, the antenna device is configured to transmit the RF signal in a beam and to scan the beam at least in an azimuthal range.

The transmitting and scanning of beam through azimuthal range enables the antenna device to increase sensitivity and communicate with large number of user equipment devices (UEs).

In a further implementation form, the antenna device is configured to scan the beam based on a location of one or more user equipment devices, UEs.

The scanning of the beam based on the location of one or more user equipment devices enables to adjust its power usage accordingly.

In a further implementation form, a spacing between any two adjacent radiating elements is at least half a wavelength of the RF signal.

The spacing of at least half a wavelength (i.e. ≥0.5λ) between any two adjacent radiating elements ensures that there is reduced coupling between the radiating elements in comparison to radiating elements arranged in conventional antenna devices.

In a further implementation form, the wavelength corresponds a minimum frequency in an operating frequency band of the antenna device.

The antenna device exploits the inherent nature of the signal propagation in the lower operating frequency band, to achieve better signal propagation and coverage as compared to mmWave signals.

In a further implementation form, the wavelength corresponds to an operation of the antenna device in a sub-6Ghz frequency band.

The antenna device exploits the inherent nature of the signal propagation, specifically, in the sub-6 Gigahertz frequency band, to achieve broader illumination, i.e. better signal propagation and coverage as compared to mmWave signals, within constrained dimensions, i.e. without increasing the size of the antenna device. For example, the antenna device may refer to a compact 5G low-band antenna architecture.

In a further implementation form, the antenna device is configured to transmit using a multiple-input-multiple-output, MIMO, method.

The antenna device supports MIMO to transmit or receive the radio frequency signals from multiple user equipment devices simultaneously with reduced coupling between the radiating elements of the antenna device.

In a further implementation form, each radiating element provides a substantially uniform illumination across its aperture.

Each radiating element is compact in size and provide approximately uniform illumination on its aperture, for example, for achieving high directivity.

In another aspect, the present disclosure provides an antenna device for receiving a cellular communication signal, comprising the antenna device configured in a receive mode.

Antenna device of the present disclosure is configured to operate in a transmit mode or the receive mode, or both for flexibility when in operation.

In yet another aspect, the present disclosure provides a base station comprising one or more antenna devices.

The base station that includes the one or more antenna devices achieves all the advantages and effects of the antenna device described in the previous aspects.

It is to be appreciated that all the aforementioned implementation forms can be combined.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1A: is an illustration of an antenna device for transmitting or receiving a radio frequency (RF) signal, in accordance with an embodiment of the present disclosure;
- FIG. 1B: is an exploded view of the antenna device of FIG. 1A, in accordance with an embodiment of the present disclosure;
- FIG. 1C: is an illustration of an architecture of the antenna device of FIG. 1A in simplified form, in accordance with an embodiment of the present disclosure;
- FIG. 2A: is an illustration of different architectures of antenna devices and their corresponding performance in a graphical representation, in accordance with various embodiments of the present disclosure;
- FIG. 2B: is a graphical representation that depicts return loss levels corresponding to different architectures of antenna devices, in accordance with an embodiment of the present disclosure;
- FIG. 2C: is a graphical representation that depicts isolation levels corresponding to different architectures of antenna devices, in accordance with an embodiment of the present disclosure; and
- FIG. 3: is a network diagram that illustrates a base station with one or more antenna devices and one or more user equipment, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

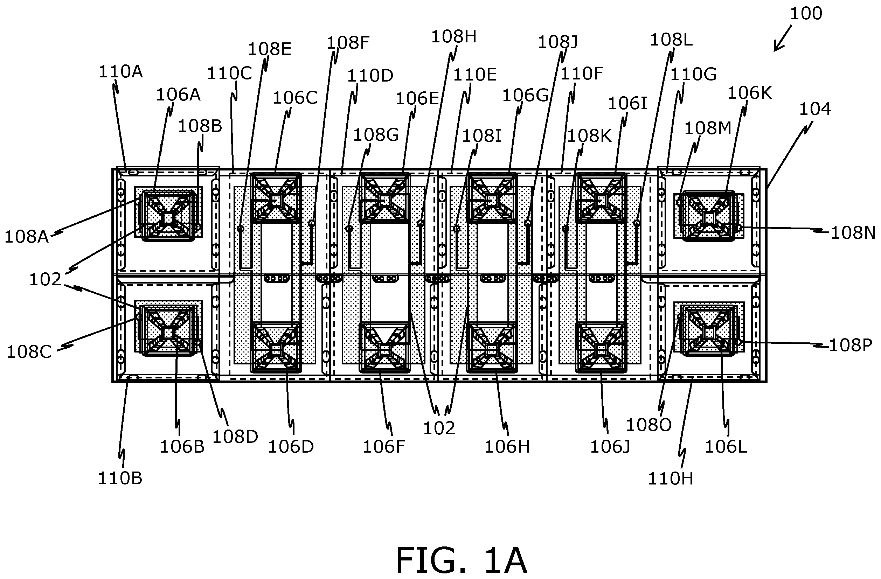

FIG. 1A is an illustration of an antenna device for transmitting or receiving a radio frequency (RF) signal, in accordance with an embodiment of the present disclosure. With reference to FIG. 1A, there is shown an antenna device **100.** The antenna device **100** includes a plurality of RF signal feeds **102** and an array **104** of radiating elements **106A** to **106L.** In an implementation, the antenna device **100** further comprises a plurality of power transceivers **108A** to **108P.**

The antenna device **100** is used for transmitting or receiving a radio frequency signal, for example, in a cellular communication. Specifically, the antenna device **100** comprises the plurality of RF signal feeds **102** and an array (e.g. the array **104)** of M times N radiating elements (e.g. the radiating elements **106A** to **106L),** the array comprising M rows and N columns, where M≥2 and N≥M. The plurality of RF signal feeds **102** refer to electrically conductive tracks, for example, metallic tracks, via which electric current is provided to one or more radiating elements of each cluster in the antenna device **100.** The array **104** refers to a collection of M times N radiating elements (e.g. the radiating elements **106A** to **106L),** which operates to transmit or receive radio frequency signals in the antenna device **100.** M refers to rows, whereas N refers to columns. In the array **104,** the number of rows is greater than or equal to two. Moreover, in the array **104,** the number of columns is greater than or equal to the number of rows. This provides a horizontal form factor to the antenna device **100** (i.e. considering an aperture plane, its width is greater than its height when deployed).

According to an embodiment, N equals six, seven or eight. In this embodiment (as shown in FIG. 1A), N is equal to six (i.e. the array **104** includes six columns). In order to increase the inter-element isolation, the number of radiating elements and the number of physical columns are reduced in the antenna device **100,** as compared to a conventional antenna device. For example, most conventional antenna devices have eight or more columns, which is reduced to six or seven in the antenna device **100** (in some cases to eight). In an example, the number of columns in the array **104,** i.e. the number N, may be limited by a maximum permitted size of the antenna device **100** and the spacing between adjacent radiating elements.

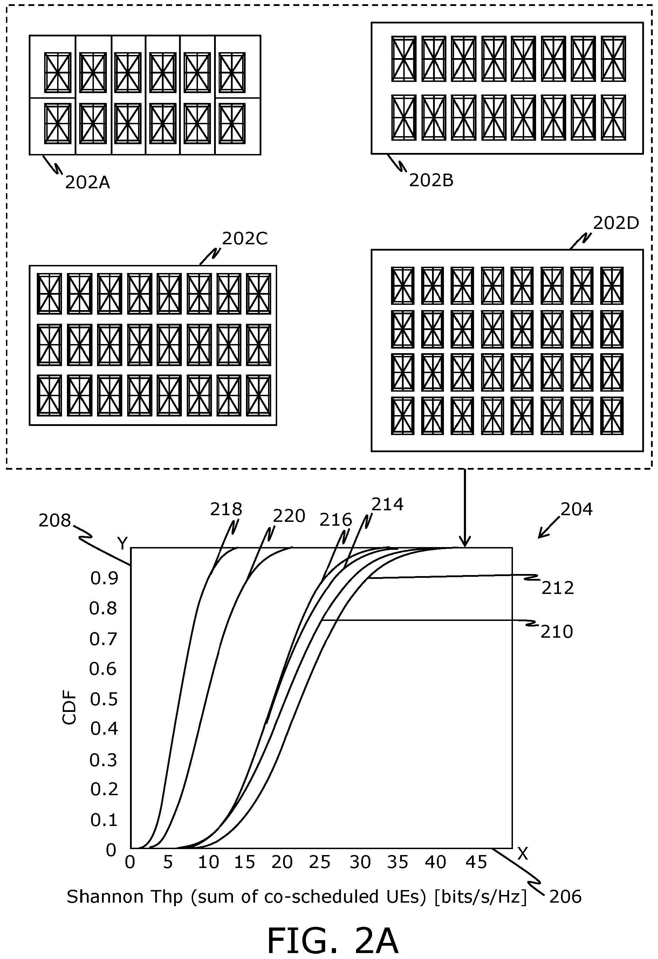

According to an embodiment, M equals two, three, or four. In this embodiment (as shown in FIG. 1A), M is equal to two. In this embodiment, there is shown the array **104** of two times six radiating elements (i.e. two rows, where each row has 6 radiating elements). In other words, twelve radiating elements **102A** to **102L** are described in this embodiment. In an example, the architecture of the antenna device **100** refers to a 5G low-band antenna architecture, which provides a practical trade-off between high system performance and attainable isolation and active return loss levels within constrained aperture size (i.e. the antenna device **100** is in compliance to the strong size constraint specified for low frequency band (e.g. sub-6 Ghz) antennas). Alternatively stated, one of the best practical trade-off between system performance and achievement of the necessary levels of isolation is observed, for example, in the antenna architecture of 2 rows x 6 columns (e.g. in the antenna device **100,** as shown in FIG. 1A). Moreover, the array **104** of two times six radiating elements ensures a compact size of the antenna device **100.** In some alternative embodiments, there is provided an array of two times eight radiating elements, an array of three times eight radiating elements, or an array of four times eight radiating elements. Such embodiments are described, for example, in FIG. 2A. It is to be understood to one of ordinary skill in the art that the number of M rows may not be limited to two, three, or four, and that N columns may not be limited to six, seven or eight. It is to be understood that the number of M rows and N columns vary, as long as a horizontal form factor of a given antenna device (e.g. the antenna device **100)** is achieved. In an example, the horizontal form factor of the given antenna device (e.g. the antenna device **100)** is achieved by having the number of N columns greater than the N rows (e.g. N=30, M=8, and the like). Alternatively stated, when deployed each antenna device, such as the antenna device **100,** have a larger horizontal dimension by way of having more N columns than a vertical dimension, as shown in the FIG. 1A, in an example.

The array **104** is subdivided into a plurality of clusters **110A** to **110H,** each cluster comprising one or more radiating elements (of the radiating elements **106A** to **106L),** the one or more radiating elements of each cluster connected to one of the RF signal feeds (i.e. one of the plurality of RF signal feeds **102).** The columns (of the array **104)** include two outer columns and one or more inner columns, each inner column comprising K1 clusters, K1≥1, each outer column comprising K2 clusters, wherein K2>K1. The cluster refers to a collection of one or more radiating elements which isolate the one or more radiating elements of one cluster from other clusters. Specifically, the clusters are sets of radiating elements that are fed jointly (e.g. using the RF signal feed), and the relation between their feedings is pre-defined by analog means (e.g. by a fixed feeding network of conductive tracks printed on a board (printed circuit board), or by a variable electro-mechanical phase-shifter).

In other words, the one or more radiating elements within a given cluster are fed jointly. In an example, this joint feeding may be fixed (e.g. by means of a fixed network) or variable (e.g. by means of a variable phase-shifter). Generally, a signal characteristic (e.g. amplitude and phase) associated with different radiating elements within a given cluster (i.e. intra-cluster) is related in a pre-defined way (for fixed network), or in a pre-defined range (for variable network). On the other hand, among the different clusters (i.e. inter-cluster), the RF signals are potentially obtained by means of real-time or near-real time algorithms, assigned digitally, and may not be pre-defined, in an example.

The distribution of the plurality of clusters **110A** to **110H** in the array **104** is such that it enables high azimuthal resolution with capability to transmit independent information streams, and maintains adequate separation between the radiating elements **102A** to **102L** to accomplish the required return loss and isolation levels within constrained dimensions, i.e., without increasing the size of the antenna device **100** (as compared to the conventional antenna device). The outer columns refer to the columns that are on opposite edges of the array **104.** The one or more inner columns are provided between at least two outer columns.

Moreover, in this embodiment, the antenna device **100** has a greater number of clusters in the outer columns (e.g. by split of the outer columns) in comparison to number of clusters in inner columns (i.e. K2>K1). This distribution of clusters (e.g. more clusters at outer or edge columns than inner columns) ensures adequate system performance and illumination efficiency of its aperture even if the number of radiating elements and number of clusters in the antenna device **100** is comparatively less than a conventional antenna device. In the array **104,** there at least one cluster (four clusters in this embodiment) in the form of a column, and at least two clusters in the form of a split column. In this case, each of the two outer columns is in the form the split column.

According to an embodiment, the columns include two or more inner columns. In this embodiment, for example, as shown in the FIG. 1A, there are four inner columns and two outer columns. Each of the four inner columns includes one cluster (e.g. the cluster **110C,** the cluster **110D,** the cluster **110E,** or the cluster **110F).** Each of the two outer columns includes two clusters (e.g. one outer column includes the clusters **110A** and **110B** and the other outer column includes the clusters **110G** and **110H).** Thus, according to this embodiment, the number of clusters is eight. The cluster **110A** in a first outer column of the two outer columns comprises the radiating element **106A.** The cluster **110B** in the first outer column (split column) of the two outer columns comprises the radiating element **106B.** The cluster **110C** in a first inner column comprises the radiating element **106C** and the radiating element **106D.** The cluster **110D** in a second inner column comprises the radiating element **106E** and the radiating element **106F.** The cluster **110E** in a third inner column comprises the radiating element **106G** and the radiating element **106H.** The cluster **110F** in a fourth inner column comprises the radiating element **1061** and the radiating element **106J.** The cluster **110G** in a second outer column of the two outer columns comprises the radiating element **106K.** The cluster **110H** in a second outer column (i.e. a split column) comprises the radiating element **106L.**

Optionally, in some implementations, both the outer columns may not be split. For example, one or more outer columns at one side (i.e. one edge) of the antenna device **100** is split whereas one or more outer columns at the other side of the antenna device **100** is potentially not split. Alternatively stated, some outer columns may be split columns having two different non-overlapping clusters, whereas some are potentially not split. The selection of splitting of outer columns potentially depend on how much illumination efficiency of its aperture is to be achieved even if the number of radiating elements and number of regular clusters (without split) in the antenna device **100** is less than a conventional antenna device.

According to an embodiment, one or more of the columns each comprise two clusters of radiating elements, the two clusters being arranged adjacent to one another. In this embodiment, each of the two outer columns includes two clusters. For example, the first outer column includes the cluster **110A** and the cluster **110B** arranged adjacent to one another and the second outer column includes the cluster **110G** and the cluster **110H** arranged adjacent to one another. The two clusters being arranged adjacent to each other means that the two clusters do not overlap and are not interleaved with each other. In some embodiments, in addition to having two or more clusters in the outer columns (i.e. edge columns), one or more inner columns may potentially have two or more clusters without limiting the scope of the disclosure. Moreover, it is to be understood by one of skill in the art that two or more columns may be grouped together, and that one or more different clustering schemes may be used, without limiting the scope of the disclosure.

According to an embodiment, the rows and the columns in the antenna device **100** are horizontal and vertical, respectively, and wherein the vertical is a direction toward the earth's centre from a position of the antenna device **100** when in operation, and the horizontal is a direction that is orthogonal to the vertical direction. The M rows are arranged horizontally in terms of its arrangement in the antenna device **100,** whereas the N columns are arranged vertically. In other words, the term horizontal and vertical refers to directions defined with respect to the earth from a given point of interest, such as a position of the antenna device **100** when deployed. Thus, vertical is the direction toward the earth's centre from the position of the antenna device **100,** and horizontal is a direction orthogonal to the vertical direction (i.e. parallel to earth's surface). In order to increase the inter-element isolation, the number of radiating elements is reduced, both in the horizontal and the vertical orientations as compared to conventional antenna devices. Moreover, when deployed each antenna device, such as the antenna device **100,** have a larger horizontal dimension than a vertical dimension. As a result of the larger horizontal dimension, the aperture is wider than taller. Moreover, in the array **104,** as the number of columns is greater than the number of rows, the antenna device **100** has a horizontal form factor (i.e. considering an aperture plane, its width is greater than its height when deployed). The massive MIMO performance of the antenna device **100** is improved by utilizing an architecture has a horizontal form factor (i.e. wider than taller when deployed). Alternatively stated, a horizontal extent of the array **104** is larger than a vertical extent. The horizontal extent is defined by the number of radiating elements placed adjacent to each other in the horizontal direction. The vertical extent is defined by the number of radiating elements placed adjacent to each other in the vertical direction.

According to an embodiment, a spacing between any two adjacent radiating elements (of the radiating elements **106A** to **106L)** is at least half a wavelength of the RF signal. The spacing between any two adjacent radiating elements is of at least half the wavelength (i.e. ≥0.5λ) of the radio frequency signal to enable antenna device **100** to have improved (e.g. optimal or near optimal) characteristics while transmitting and receiving of radio frequency signal in comparison to conventional technologies which have comparatively lower performance characteristics while transmitting and receiving of radio frequency signal. Beneficially, the spacing of at least half a wavelength provides acceptable and manageable coupling levels of radio frequency signals transmitted or received by the radiating elements **106A to 106L** in comparison to conventional antenna devices where there is unacceptable and unmanageable coupling levels between radio frequency signals transmitted or received by radiating elements due to dense packing of conventional radiating elements. Beneficially, the antenna device **100** has improved system performance with compliant S-parameters (i.e. scattering parameters) (i.e. compliant ports with improved or at least acceptable return losses and isolation levels) in comparison to conventional antenna devices as a result of the inter-element spacing between any two adjacent radiating elements of greater than or equal to half the wavelength of the RF signal.

According to an embodiment, the wavelength corresponds a minimum frequency in an operating frequency band of the antenna device **100.** The operating frequency band refers to a range of radio frequency signals that the antenna device **100** transmits to (or receives from) user equipment devices. According to an embodiment, the wavelength corresponds to an operation of the antenna device **100** in a sub-6Ghz frequency band. The sub-6 Gigahertz frequency band may also be referred to as a lower frequency band in the 5G communication. In an embodiment, the radiating elements **106A** to **106L** utilize the low frequency band for transmitting or receiving the radio frequency signals (e.g. each radiating element in the antenna device **100** may emit continuous complicated waves). The antenna device **100** exploits the inherent nature of the signal propagation in the sub-6 Gigahertz frequency band, to achieve better signal propagation and coverage as compared to mmWave signals. Thus, the antenna device **100** provides a compact 5G low-band antenna architecture, which provides a practical trade-off between high system performance and attainable isolation and active return loss levels within constrained aperture size (i.e. the antenna device **100** is in compliance to the strong size constraint specified for low frequency band (e.g. sub-6 Ghz) antennas).

According to an embodiment, each of the plurality of radiating elements **106A to 106L** is dual polarised. The dual polarisation of the radiating elements **106A** to **106L** enables the antenna device **100** to transmit and receive the radio frequency signals in both horizontally and vertical orientations (which are orthogonal to each other) simultaneously. By virtue of dual polarisation, the antenna device **100** can transmit and receive radio frequency signals to and from a larger number of the user equipment in comparison to radiating elements which are single polarised.

According to an embodiment, each radiating element provides a substantially uniform illumination across its aperture. Each radiating element (e.g. of the radiating elements **106A** to **106L)** is compact in size and provide significantly uniform illumination on its aperture, for example, for achieving high directivity. High directivity means high concentration of a radiating pattern of the antenna device **100** in a specific direction so that a beam of RF signals can travel further. The way the radiating clusters **110A to 110H** are distributed horizontally in columns and split columns in the antenna device **100** also contributes in provisioning of substantial uniform illumination. In an example, the term "substantially uniform" refer more or less uniform illumination with possibility of less than 30% non-uniform illumination. In some embodiments, each radiating element may not provide uniform illumination across its aperture.

According to an embodiment, the RF signal feeds (of the plurality of RF signal feeds **102)** are each connectable to a respective power transceiver. In an example, the power transceiver corresponds to a radio chain or is a part of the radio chain that is connected to each RF signal feed that feeds each cluster. A radio chain refers to a single radio and all of its supporting signal processing electronic components, including a transceiver, one or more mixers, one or more amplifiers, and one or more analog/digital converters. Each radiating element of the radiating elements **106A** to **106L** may be also referred to as an antenna element.

Typically, each of the clusters is fed by one radio chain. In this embodiment, each cluster is a dual-polarized cluster and thus is fed by two radio chains (i.e. two power transceivers). In this embodiment, the clusters **110A** to **110H** are not geometrically equal (as the outer columns are split columns having two different non-overlapping clusters) are arranged such that an adequate separation between the radiating elements is maintained to accomplish the required return loss and isolation levels within constrained dimensions, i.e., without increasing the size of the antenna device **100** that operates in low-frequency bands.

In this embodiment, the power transceivers **108A** and **108B** are connected to radiating element **106A.** The power transceivers **108C** and **108D** are connected to radiating element **106B.** Each of the power transceivers **108E** and **108F** is connected to the radiating elements **106C** and **106D.** Similarly, each of the power transceivers **108G** and **108H** is connected to the radiating elements **106E** and **106F** (i.e. each power transceiver is jointly feeding two radiating elements, as shown). Each of the power transceivers **108I** and **108J** is connected to the radiating elements **106G** and **106H.** Each of the power transceivers **108K** and **108L** is connected to radiating elements **1061** and **106J.** The power transceivers **108M** and **108N** are connected to a single radiating element, such as the radiating element **106K.** The power transceivers **1080** and **108P** are connected to the radiating element **106L.**

In this embodiment, the number of power transceivers is sixteen. In this embodiment, the sixteen power transceivers namely the plurality of power transceivers **108A** to **108P** (i.e. 16 radio chains) are connected to twelve radiating elements in the array **104** as a result of the advanced cluster distribution in the antenna device **100.**

In operation, according to an embodiment, the antenna device **100** is configured to transmit the RF signal in a beam and to scan the beam at least in an azimuthal range. The azimuthal range refers to a range in which maximum receiving devices (i.e. UEs) are deployed to receive radio frequency signal transmitted by the antenna device **100.** In other words, the azimuthal range is a value or a range of values of azimuthal angle of the beam relative to the array **104.** The transmission of radio frequency signal in the beam and to scan the beam through azimuthal range enables in transmitting or receiving the radio frequency signals to and from the radiating elements **106A** to **106L** in a specific direction (that is the azimuthal range) to provide signals at high data rates. For example, some or all of the radiating elements **106A** to **106L** may transmit complicated waves (i.e. transmit radio frequency signals at a similar wavelength and phase to transmit radio frequency signals in a specific direction). In some cases, the antenna device **100** can also have steering capabilities in elevation.

According to an embodiment, the antenna device **100** is configured to scan the beam based on a location of one or more user equipment devices (UEs). The antenna device **100** is configured to perform beamforming to communicate (send or receive) one or more beams of RF signals with the UEs. The beam is scanned based on the location of UEs so that a specific beam reaches a UE (or UEs).

Furthermore, the user equipment device is intended to be broadly interpreted to include any electronic device that may be used for voice and/or data communication over a wireless communication network. Examples of user equipment device include, but are not limited to, a cellular phone, a 5G wireless modem, an evolved universal mobile telecommunications system (UMTS) terrestrial radio access (E-UTRAN) NR-dual connectivity (EN-DC) device, or a customized telecommunications hardware. Moreover, the user equipment device is to be construed broadly, so as to encompass a variety of different types of mobile stations, subscriber stations or, more generally, communication devices, including examples such as a combination of a data card inserted in a laptop. Such communication devices are also intended to encompass devices commonly referred to as access terminals.

According to an embodiment, the antenna device **100** is configured to transmit using a multiple-input-multiple-output (MIMO) method. The antenna device **100** is configured to use the MIMO, multi-user MIMO (MU-MIMO), or massive MIMO methods for transmission or receiving of radio frequency signals via the two or more radiating elements to and from various network nodes, such as user equipment devices simultaneously. Beneficially, the antenna device **100** supports MIMO to achieve spectral efficiency for communication with the user equipment devices.

According to an embodiment, the antenna device **100** is configured for receiving a cellular communication signal, comprising the antenna device **100** configured in a receive mode. The antenna device **100** is configured to function in two modes namely a transmit mode and the receive mode. In the transmit mode, the radiating elements **106A** to **106L** of the antenna device **100** is configured to transmit the RF signals to cellular devices (i.e. user equipment devices). In the receive mode, the radiating elements **106A** to **106L** of the antenna device **100** is configured to receive the RF signals from the cellular devices. Optionally, the antenna device **100** can simultaneously work in the receive mode and the transmit mode.

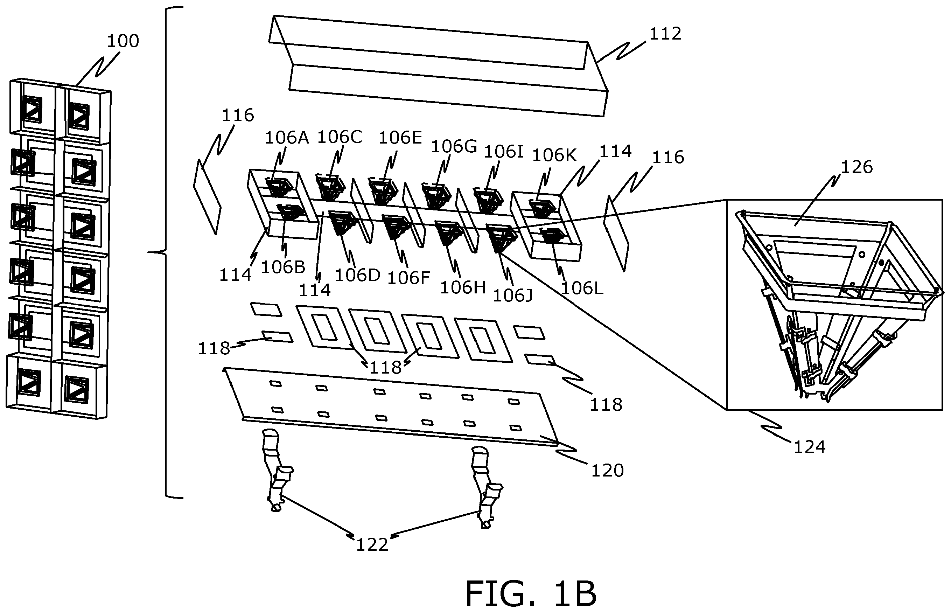

FIG. 1B is an exploded view of an antenna device, in accordance with an embodiment of the present disclosure. FIG. 1B is described in conjunction with elements from FIG. 1A. With reference to FIG. 1B, there is shown an exploded view of the antenna device **100.** The antenna device **100** further includes a radome **112,** fences **114,** covers **116,** printed circuit boards (PCBs) **118,** a reflector **120,** and the brackets **122.** There is also shown the radiating elements **106A** to **106L** of the antenna device **100** (of FIG. 1A).

In this embodiment, each of the radiating elements **106A** to **106L** is a dipole radiating element having a conical-like structure. There is the shown an enlarged view **124** of the radiating element **106J.** The enlarged view **124** depicts a mouth **126** of the radiating element **106J** via which the radio frequency signals are transmitted or received by the radiating element **106J.**

The radome **112** refers to a covering of the antenna device **100** which protects the antenna device **100** from environmental conditions (like harsh weather conditions) without affecting the signal transmission or reception. The radome **112** covers the radiating elements **106A** to **106L.**

Each of the fences **114** is used for enhanced isolation of the different clusters (such as clusters **110A** to **110H** of FIG. 1A) of the antenna device **100** and is also used for radiation pattern control of the radio frequency signals that are transmitted or received by the radiating elements **106A** to **106L** in respective clusters **110A** to **110H.** Beneficially, the fences **114** enables in reducing any unwanted interferences between radio frequency signals transmitted or received by the radiating elements **106A** to **106L.**

The covers **116** are used to protect the antenna device **100** from any damages, such as damage to antenna structure from environmental conditions, and the like.

Each of the PCBs **118** is used to enable electric connection in the antenna device **110** such as connection of the plurality of RF signal feeds **102** with the radiating elements **106A** to **106L** and further provide mechanical support to the radiating elements **106A** to **106L** in their respective clusters.

The reflector **120** is used to improve radiation patterns of the radio frequency signals transmitted or received by the radiating elements **106A** to **106L.** In an example, the reflector **120** increases gain of the antenna device **100.** In another example, the reflector **120** may be used to focus radio frequency signals in one direction.

The brackets **122** are used to secure different components of the antenna device **100.** The brackets **122** may also be referred to as a clamp used to physically hold all the components of the antenna device **100,** for example, the reflector **120** and the fences **114** at one physical position. Beneficially, the brackets **122** protects the components from any unintended movements.

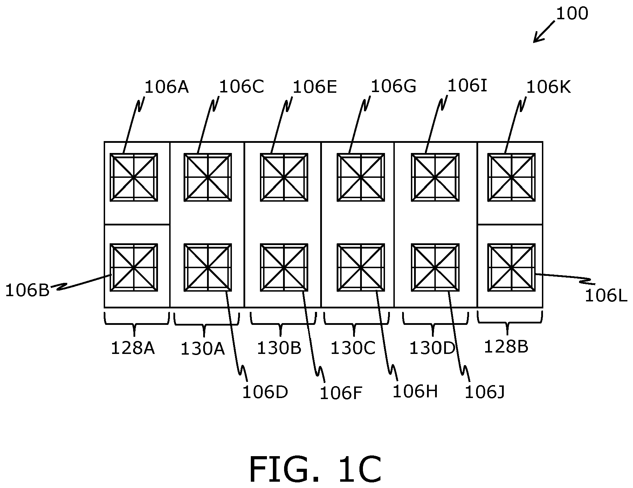

FIG. 1C is a schematic view of an architecture of an antenna device of FIG. 1 in simplified form, in accordance with an embodiment of the present disclosure. FIG. 1C is described in conjunction with elements from FIG. 1A and 1B. With reference to FIG. 1C, there is shown the antenna device **100.** The antenna device **100** includes the array **104** of radiating elements **106A** to **106L.**

The array **104** includes six columns that are vertical and two rows that are horizontal when in operation. The array **104** includes two outer columns **128A** and **128B** and four inner columns **130A** to **130D.** The outer column **128A** is a split column which includes two clusters wherein each cluster has one radiating element namely the radiating elements **106A** and the radiating element **106B.** The inner column **130A** includes one cluster wherein the cluster has two radiating elements namely the radiating elements **106C** and **106D.** Similarly, the inner column **130B** includes one cluster wherein the cluster has two radiating elements, namely the radiating element **106E** and **106F.** The inner column **130C** includes one cluster wherein the cluster has two radiating element, namely radiating element **106G** and **106H.** The inner column **130D** includes one cluster wherein the cluster has two radiating elements, namely radiating elements **1061** and **106J.** The outer column **128B** includes is again a split column which has two clusters wherein each cluster has one radiating element namely the radiating element **106K** and the radiating element **106L.** In an example, the array **104** including six columns and two rows has a width less than or equal to 500 millimetres and length less than or equal to 1500 millimetres.

FIG. 2A is an illustration of different architectures of antenna devices and their corresponding performance depicted in a graphical representation, in accordance with various embodiments of the present disclosure. FIG. 2A is described in conjunction with elements from FIGs. 1A, 1B, and 1C. With reference to FIG. 2A, there is shown different architectures **202A** to **202D** of antenna devices and their corresponding performance is depicted in the graphical representation **204.**

The architecture **202A** comprises an array of radiating elements comprising two rows and six columns. The array includes two outer columns and four inner columns. Each of the four inner columns includes one cluster and each of the two outer columns includes two clusters. The architecture **202A** is same as the architecture of antenna device **100** in FIG. 1C.

The architecture **202B** comprises an array of radiating elements comprising two rows and eight columns. The architecture **202C** comprises an array of radiating elements comprising three rows and eight columns. The architecture **202D** comprises the array of radiating elements comprising four rows and eight columns.

The graphical representation **204** represents comparative performance of the architectures **202A** to **202D** having horizontal form factor in terms of cell-throughput in a multi-user MIMO (MU-MIMO) scenario. The graphical representation **204** represents Shannon Tomlinson Harashima Precoding (THP) (sum of co-scheduled UEs) in bits/s/Hz on X-axis **206** and values of cumulative distribution function (CDF) on Y-axis **208.** In the graphical representation **204,** a line **210** represents performance of the architecture **202A** (having horizontal form factor with 16 Rx and 16 Tx in 2 rows and 6 columns). Similarly, a line **212** represents performance of the architecture **202B** (having horizontal form factor with 16 Rx and 16 Tx in 2 rows and 8 columns), a line **214** represents performance of the architecture **202C** (having horizontal form factor with 16 Rx and 16 Tx in 3 rows), and the line **216** represents performance of the architecture **202D** (having horizontal form factor with 16 Rx and 16 Tx in 4 rows). For comparison purpose of antenna devices having horizontal form factor with conventional antenna devices typically having vertical form factor (more rows than columns), the line **218** and line **220** represents performance of conventional architectures of conventional antenna devices (i.e. antenna devices having vertical form factor which have number of rows greater than number of columns).

The graphical representation **204** depicts that the architectures **202A** to **202D** having horizontal form factor has substantially significantly improved performance characteristics (represented by the lines **210, 212, 214,** and **216)** in comparison to conventional architectures having vertical form factor (represented by the lines **218** and **220).** Moreover, the architecture **202A** (which corresponds to the architecture of the antenna device **100** of FIGs. 1A to 1C) exhibits one of the best practical trade-off between system performance and achievement of the necessary levels of isolation with comparatively more compact size (performance represented by the line **210).**

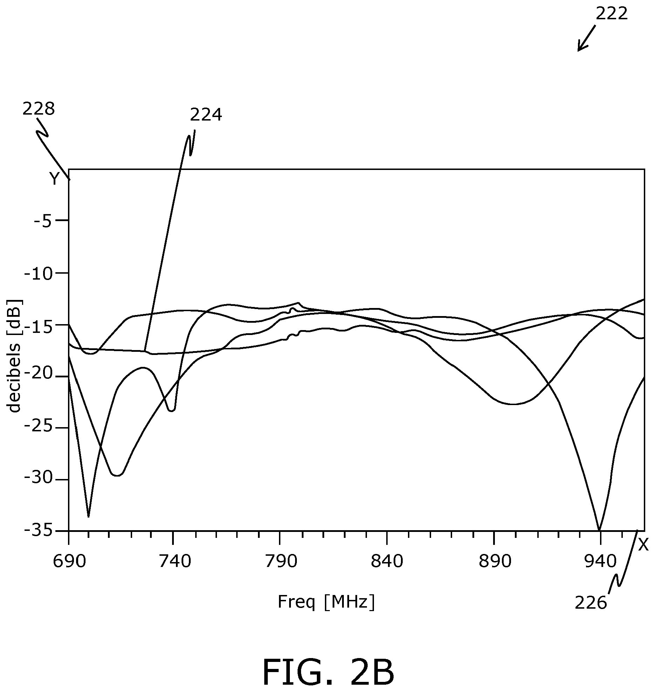

FIG. 2B is a graphical representation that depicts return loss levels corresponding to different architecture of antenna devices, in accordance with an embodiment of the present disclosure. FIG. 2B is described in conjunction with elements from FIGs. 1A, 1B, 1C and 2A. With reference to FIG. 2B, there is shown a graphical representation **222** that depicts return loss levels of at least the architecture **202A** represented by a line **224** is less than or equal to minus fourteen decibels (i.e. ≤ -14 dB) consistently for different frequencies, which is better as compared to return loss levels of other architectures. The line **224** corresponds to the architecture **202A** of FIG. 2A. The graphical representation **222** on its X-axis **226** depicts frequencies of radio frequency signals transmitted by different architectures in megahertz (MHz) and on its Y-axis **228** depicts values of return losses in decibels.

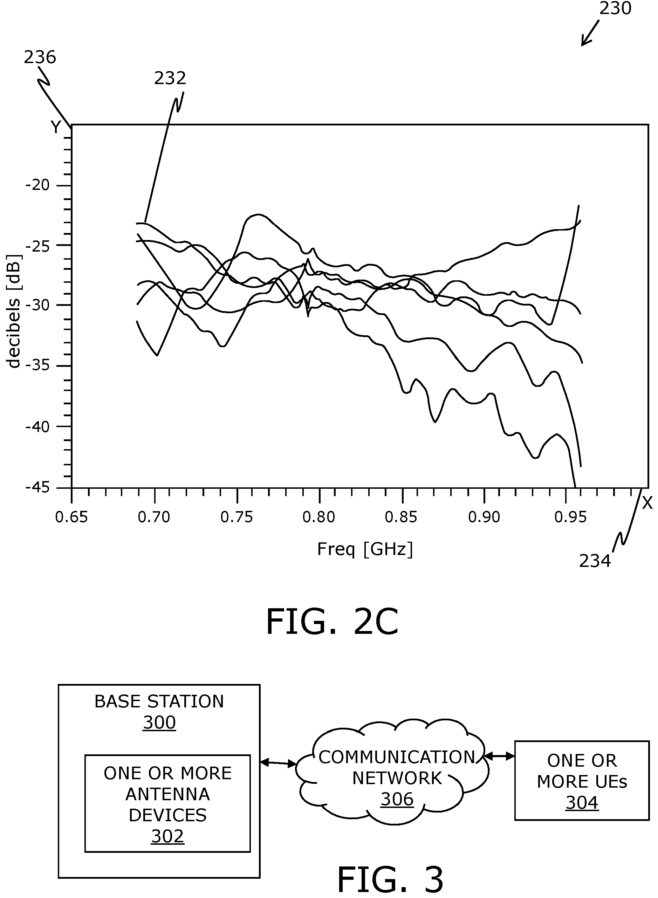

FIG. 2C is a graphical representation that depicts isolation levels corresponding to different architecture of antenna devices, in accordance with an embodiment of the present disclosure. FIG. 2C is described in conjunction with elements from FIGs. 1A, 1B, 1C, 2A, and 2B. With reference to FIG. 2C, there is shown a graphical representation **230** that depicts isolation levels of at least the architecture **202A** represented by a line **232** is approximately less than or equal to minus twenty-two decibels (i.e. ≤ -22 dB) consistently for different frequencies, which is better as compared to isolation levels of other architectures. The line **232** corresponds to the architecture **202A** of FIG. 2A. The graphical representation **230** on its X-axis **234** depicts frequencies of radio frequency signals transmitted by different architectures in gigahertz (GHz) and on its Y-axis **236** depicts values of isolation levels in decibels.

FIG. 3 is a block diagram that illustrates a base station with one or more antenna devices, in accordance with an embodiment of the present disclosure. FIG. 3 is described in conjunction with elements from FIGs. 1A, 1B, 1C, 2A, 2B and 2C. With reference to FIG. 3, there is shown a network environment with a base station **300** that comprises one or more antenna devices **302,** one or more user equipment devices (UEs) **304,** and a communication network **306.** The one or more antenna devices **302** corresponds to the antenna device **100** of FIG. 1A to 1C.

The base station **300** include suitable logic, circuitry, and/or interfaces that may be configured to communicate with a plurality of wireless communication devices over a cellular network (e.g. 5G or upcoming 6G) via the one or more antenna devices **302.** Examples of the base station **300** may include, but is not limited to, an evolved Node B (eNB), a Next Generation Node B (gNB), and the like. In an example, the base station **300** may include a plurality of antenna devices that function as an antenna system to communicate with the plurality of wireless communication devices in an uplink and a downlink communication. Examples of the plurality of wireless communication devices include, but is not limited to, a user equipment (e.g. a smartphone), a customer premise equipment, a repeater device, a fixed wireless access node, or other communication devices or telecommunications hardware.

Each of the one or more UEs **304** may include suitable logic, circuitry, interfaces and/or code that is configured to communicate (send/receive) RF signals. Examples of the one or more UEs **304** include, but is not limited to, a portable electronic device (e.g. a smart phone, a drone, an Internet-of-Things (IoT) device, a machine type communication (MTC) device, a hand-held computing device, an evolved universal mobile telecommunications system (UMTS) terrestrial radio access (E-UTRAN) NR-dual connectivity (EN-DC) device, or any other customized hardware for wireless telecommunication), or a non-portable electronic device, such as a fixed wireless access modem. Alternatively, each of the one or more UEs **304** may be a vehicle or a telecommunications unit (TCU) in a vehicle.

In an example, the communication network **306** refers to a cellular network (e.g. true 5G, 5G New Radio (NR) (e.g. sub 6 GHz, cmWave, or mmWave communication)). In another example, the communication network **306** refers to an IoT network for massive MIMO.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. An antenna device (100) for transmitting or receiving a radio frequency, RF, signal, the antenna device (100) comprising:
a plurality of RF signal feeds (102); and
an array (104) of M times N radiating elements (106A to 106L), the array comprising M rows and N columns, wherein M≥2 and N>M;
wherein the array (104) is subdivided into a plurality of clusters (110A to 110H), each cluster comprising one or more radiating elements, the one or more radiating elements of each cluster connected to one of the RF signal feeds, and different clusters are connected to different RF signal feeds;
wherein the columns include two outer columns (128A, 128B) and one or more inner columns (130A, 130B, 130C, 130D), **characterized in that** each inner column comprising K1 clusters, K1≥1, each outer column comprising K2 clusters, wherein K2>K1.

2. The antenna device (100) according to claim 1, wherein the rows and the columns in the antenna device (100) are horizontal and vertical, respectively, and wherein the vertical is a direction toward the earth's centre from a position of the antenna device (100) when in operation, and the horizontal is a direction that is orthogonal to the vertical direction.

3. The antenna device (100) of claim 1 or 2, wherein N equals six, seven or eight.

4. The antenna device (100) of any preceding claim, wherein the columns include two or more inner columns.

5. The antenna device (100) of any preceding claim, wherein M equals two, three, or four.

6. The antenna device (100) of any preceding claim, wherein the RF signal feeds (102) are each connectable to a respective power transceiver (108A to 108P).

7. The antenna device (100) of claim 6, wherein one or more of the columns each comprise two clusters of radiating elements, the two clusters being arranged adjacent to one another.

8. The antenna device (100) of claim 6 or 7, wherein the number of power transceivers (108A to 108P) is sixteen and the number of clusters (110A to 110H) is eight.

9. The antenna device (100) of any preceding claim, wherein each of the radiating elements (106A to 106L) is dual polarised.

10. The antenna device (100) of any preceding claim, wherein the antenna device (100) is configured to transmit the RF signal in a beam and to scan the beam at least in an azimuthal range.

11. The antenna device (100) of claim 10, wherein the antenna device (100) is configured to scan the beam based on a location of one or more user equipment devices, UEs, (304).

12. The antenna device (100) of any preceding claim, wherein a spacing between any two adjacent radiating elements is at least half a wavelength of the RF signal.

13. The antenna device (100) of claim 12, wherein the wavelength corresponds a minimum frequency in an operating frequency band of the antenna device (100).

14. An antenna device (100) for receiving a cellular communication signal, comprising the antenna device (100) of any preceding claim configured in a receive mode.

15. A base station (300) comprising one or more antenna devices (302) of any preceding claim.

## Patentansprüche

1. Antennengerät (100) zum Übertragen oder Empfangen eines Hochfrequenzsignals, HF-Signals, wobei das Antennengerät (100) Folgendes umfasst:
eine Vielzahl von HF-Signal-Zuführungen (102) und
ein Array (104) von M mal N Strahlelementen (106A bis 106L), wobei das Array M Reihen und N Spalten umfasst, wobei M≥2 und N>M;
wobei das Array (104) in eine Vielzahl von Clustern (110A bis 110H) unterteilt ist, jedes Cluster ein oder mehrere Strahlelement(e) umfasst, das eine oder die mehreren Strahlelement(e) jedes Clusters mit einer der HF-Signal-Zuführungen verbunden ist und verschiedene Cluster mit verschiedenen HF-Signal-Zuführungen verbunden sind;
wobei die Spalten zwei äußere Spalten (128A, 128B) und eine oder mehrere innere Spalte(n) (130A, 130B, 130C, 130D) einschließen, **dadurch gekennzeichnet, dass** jede innere Spalte K1 Cluster umfasst, K1≥1, jede äußere Spalte K2 Cluster umfasst, wobei K2≥K1.

2. Antennengerät (100) nach Anspruch 1, wobei die Reihen und die Spalten in dem Antennengerät (100) horizontal bzw. vertikal sind und wobei vertikal eine Richtung zur Erdmitte hin von einer Position des Antennengeräts (100), wenn im Betrieb, ist und horizontal eine Richtung ist, die orthogonal zur vertikalen Richtung ist.

3. Antennengerät (100) nach Anspruch 1 oder 2, wobei N gleich sechs, sieben oder acht ist.

4. Antennengerät (100) nach einem der vorhergehenden Ansprüche, wobei die Spalten zwei oder mehrere innere Spalten einschließen.

5. Antennengerät (100) nach einem der vorhergehenden Ansprüche, wobei M gleich zwei, drei oder vier ist.

6. Antennengerät (100) nach einem der vorhergehenden Ansprüche, wobei die HF-Signal-Zuführungen (102) jeweils mit einem jeweiligen Leistungs-Transceiver (108A bis 108P) verbindbar sind.

7. Antennengerät (100) nach Anspruch 6, wobei eine oder mehrere der Spalten jeweils zwei Cluster von Strahlelementen umfasst/umfassen, wobei die zwei Cluster benachbart zueinander angeordnet sind.

8. Antennengerät (100) nach Anspruch 6 oder 7, wobei die Anzahl von Leistungs-Transceivern (108A bis 108P) sechzehn ist und die Anzahl von Clustern (110A bis 110H) acht ist.

9. Antennengerät (100) nach einem der vorhergehenden Ansprüche, wobei jedes der Strahlelemente (106A bis 106L) dualpolarisiert ist.

10. Antennengerät (100) nach einem der vorhergehenden Ansprüche, wobei das Antennengerät (100) zum Übertragen des HF-Signals in einem Strahl und zum Scannen des Strahls zumindest in einem azimutalen Bereich ausgelegt ist.

11. Antennengerät (100) nach Anspruch 10, wobei das Antennengerät (100) zum Scannen des Strahls basierend auf einem Ort eines Benutzereinrichtungsgeräts oder mehrerer Benutzereinrichtungsgeräte, UE(s), (304) ausgelegt ist.

12. Antennengerät (100) nach einem der vorhergehenden Ansprüche, wobei ein Abstand zwischen beliebigen zwei benachbarten Strahlelementen zumindest eine halbe Wellenlänge des HF-Signals ist.

13. Antennengerät (100) nach Anspruch 12, wobei die Wellenlänge einer Mindestfrequenz in einem Betriebsfrequenzband des Antennengeräts (100) entspricht.

14. Antennengerät (100) zum Empfangen eines Mobilfunkkommunikationssignals, das das Antennengerät (100) nach einem der vorhergehenden Ansprüche konfiguriert in einem Empfangsmodus umfasst.

15. Basisstation (300), die ein oder mehrere Antennengerät(e) (302) nach einem der vorhergehenden Ansprüche umfasst.

## Revendications

1. Dispositif antenne (100) pour transmettre ou recevoir un signal radiofréquence, RF, le dispositif antenne (100) comprenant :
une pluralité d'alimentations de signal RF (102) ; et
un réseau (104) de M multiplié par N éléments rayonnants (106A à 106L), le réseau comprenant M rangées et N colonnes, dans lequel M ≥ 2 et N > M ;
dans lequel le réseau (104) est sous-divisé en une pluralité de groupes (110A à 110H), chaque groupe comprenant un ou plusieurs éléments rayonnants, l'un ou les plusieurs éléments rayonnants de chaque groupe étant connectés à l'une des alimentations de signal RF, et différents groupes étant connectés à différentes alimentations de signal RF ;
dans lequel les colonnes incluent deux colonnes extérieures (128A, 128B) et une ou plusieurs colonnes intérieures (130A, 130B, 130C, 130D), **caractérisé en ce que**
chaque colonne intérieure comprend K1 groupes, K1 ≥ 1, chaque colonne extérieure comprenant K2 groupes, dans lequel K2 > K1.

2. Dispositif antenne (100) selon la revendication 1, dans lequel les rangées et les colonnes dans le dispositif antenne (100) sont respectivement horizontales et verticales, et dans lequel la verticale est une direction vers le centre de la terre depuis une position du dispositif antenne (100) lorsqu'il est en fonctionnement, et l'horizontale est une direction qui est orthogonale à la direction verticale.

3. Dispositif antenne (100) selon la revendication 1 ou 2, dans lequel N est égal à six, sept, ou huit.

4. Dispositif antenne (100) selon l'une quelconque des revendications précédentes, dans lequel les colonnes comprennent au moins deux colonnes intérieures.

5. Dispositif antenne (100) selon l'une quelconque des revendications précédentes, dans lequel M est égal à deux, trois, ou quatre.

6. Dispositif antenne (100) selon l'une quelconque des revendications précédentes, dans lequel les alimentations de signal RF (102) sont chacune connectables à un transmetteur-récepteur de puissance respectif (108A à 108P).

7. Dispositif antenne (100) selon la revendication 6, dans lequel une ou plusieurs des colonnes comprennent chacune deux groupes d'éléments rayonnants, les deux groupes étant agencés de façon adjacente l'un à l'autre.

8. Dispositif antenne (100) selon la revendication 6 ou 7, dans lequel le nombre de transmetteurs-récepteurs de puissance (108A à 108P) est de seize et le nombre de groupes (110A à 110H) est de huit.

9. Dispositif antenne (100) selon l'une quelconque des revendications précédentes, dans lequel chacun des éléments rayonnants (106A à 106L) est doublement polarisé.

10. Dispositif antenne (100) selon l'une quelconque des revendications précédentes, dans lequel le dispositif antenne (100) est configuré pour transmettre le signal RF dans un faisceau et pour balayer le faisceau au moins dans une plage azimutale.

11. Dispositif antenne (100) selon la revendication 10, dans lequel le dispositif antenne (100) est configuré pour balayer le faisceau sur la base d'un emplacement d'un ou de plusieurs dispositifs équipements utilisateur, UE, (304).

12. Dispositif antenne (100) selon l'une quelconque des revendications précédentes, dans lequel un espacement entre deux quelconques éléments rayonnants adjacents est au moins la moitié d'une longueur d'onde du signal RF.

13. Dispositif antenne (100) selon la revendication 12, dans lequel la longueur d'onde correspond à une fréquence minimum dans une bande de fréquence de fonctionnement du dispositif antenne (100).

14. Dispositif antenne (100) pour recevoir un signal de communication cellulaire, comprenant le dispositif antenne (100) selon l'une quelconque des revendications précédentes configuré dans un mode de réception.

15. Station de base (300) comprenant un ou plusieurs dispositifs antennes (302) selon l'une quelconque des revendications précédentes.
